# EUROPÄISCHE PATENTSCHRIFT

(11) **EP 0 330 873 B1**
(45) Veröffentlichungstag und Bekanntmachung des Hinweises auf die Patenterteilung: **01.06.1994**
(21) Anmeldenummer: 89102109.9
(22) Anmeldetag: 08.02.1989
(51) Int. Cl.: B29C 61/06

(54) **Wärmerückstellbarer Gegenstand zum Umhüllen eines Substrates**
Heat-recoverable article for covering a substrate
Article thermorétractable pour le revêtement d'un substrat

(30) Priorität: 02.03.1988 DE 3806660
(43) Veröffentlichungstag der Anmeldung: 06.09.1989
(73) Patentinhaber: kabelmetal electro GmbH, 30002 Hannover (DE)
(72) Erfinder: Marx, Karl-Heinz, D-3008 Garbsen 9 (DE)

(56) Entgegenhaltungen:
- EP-A- 0 031 868
- EP-A- 0 226 940
- EP-A- 0 299 439
- DE-A- 3 707 433
- DE-A- 3 738 586
- FR-A- 2 258 225
- GB-A- 1 141 306

## Beschreibung

Die Erfindung betrifft einen wärmerückstellbaren Gegenstand zum Umhüllen eines Substrates insbesondere zum Umhüllen von Spleißstellen elektrischer Kabel oder Rohrleitungen, bestehend aus einem vernetzten Polymeren.

Wärmeschrumpfende Gegenstände finden Verwendung für die Umhüllung von langgestreckten Gegenständen, um diese z.B. gegen Witterungseinflüsse von außen abzudichten. Ein häufiges Anwendungsgebiet ist die Umhüllung von Verbindungsstellen elektrischer Kabel. Für diesen Anwendungszweck ist eine Manschette aus wärmeschrumpfendem Kunststoff entwickelt worden, welche aus einem Band mit an zwei Längskanten angeordneten Stegen besteht. Nach dem Herumlegen der Manschette um den Kabelspleiß wird eine Verschlußschiene über die Stege geschoben, so daß die Manschette den Kabelspleiß in Form eines geschlitzten Rohres umgibt. Die Manschette weist an ihrer dem Kabelspleiß zugekehrten Oberfläche eine Kleberbeschichtung auf, die beim Schrumpferwärmen plastisch wird und während des Schrumpfvorgangs die Hohlräume zwischen der Manschette und dem Kabelspleiß und den Kabelmänteln ausfüllt. Der Kabelspleiß wird häufig noch durch einen sogenannten Liner umhüllt, welcher aus einem zum Rohr geformten Band besteht. Durch besonders gestaltete Endbereiche des Liners ergibt sich ein allmählicher Übergang von dem relativ großen Durchmesser des Kabelspleißes zu den Kabelmänteln.

Durch innere Spannungen, durch mechanische Einflüsse aber auch durch unsachgemäßes Vorgehen beim Wärmeschrumpfen, indem z. B. die Manschette örtlich überhitzt wird, kann es zu einer Rißbildung der Manschette kommen, wodurch diese unbrauchbar wird. Auch eine oberflächliche Beschädigung der Manschette kann dazu führen, daß diese beim Wärmeschrumpfen einreißt.

In der EP-OS 0 116 393 wird ein wärmeschrumpfender Gegenstand vorgeschlagen, welcher aus einem Gewebe besteht, dessen Schrumpfeigenschaft durch in Schrumpfrichtung verlaufende wärmeschrumpfende Fäden erreicht wird. Quer zur Schrumpfrichtung verlaufen Fäden aus nicht schrumpfendem hochfestem Werkstoff. Das Gewebe ist an seiner dem zu umhüllenden Substrat abgekehrten Oberfläche mit einem Polymermaterial und an seiner dem Substrat zugekehrten Oberfläche mit einem wärmeaktivierbaren Kleber beschichtet. Da das Herstellen der wärmeschrumpfbaren Fäden und deren Verwebung mit den hochfesten Fäden ein aufwendiger Arbeitsgang ist, ist ein solcher Gegenstand nicht wirtschaftlich. Darüberhinaus besteht die Gefahr, daß die dem Substrat zugekehrte wärmeaktivierbare Schicht, die bei Schrumpftemperatur zähflüssig wird, bei größeren Maschenweiten beim Schrumpfen durch die Maschen des Gewebes nach außen gepreßt wird. Ein weiterer wesentlicher Nachteil ist, daß bei Durchtrennung oder Abriß von mehreren wärmeschrumpfbaren Fäden das Gewebe seine Schrumpfeigenschaft weitestgehend einbüßt.

Aus der zum Stand der Technik gemäß Artikel 54(3) gehörigen EP-A-0299439 ist eine wärmerückstellbare Manschette zum Umhüllen von Substraten bekannt, die aus einem wärmerückstellbaren Band mit einer schrumpfenden Komponente und einer verstärkenden Komponente besteht. Die schrumpfende Komponente besteht aus einem vernetzten und gereckten Band, die verstärkende Komponente aus einem nicht geweiteten Band, welches mit der schrumpfenden Komponente verbunden ist. In der verstärkenden Komponente sind Verstärkungselemente eingebettet. Die verstärkende Komponente ist im festen Verbund mit der schrumpfbaren Komponente, wobei ein Haftvermittler zwischen der schrumpfbaren Komponente und der verstärkenden Komponente vorgesehen ist.

Da es vonnöten ist, daß das vernetzte Material vor der Verbindung oberflächenaktiviert wird, muß z.B. eine Coronabehandlung durchgeführt werden. Dies ist ein zusätzlicher Arbeitsgang, der Kosten verursacht und darüberhinaus aus Umweltgesichtspunkten (Ozon!) bedenklich ist.

Der vorliegenden Erfindung liegt die Aufgabe zugrunde, einen wärmerückstellbaren Gegenstand anzugeben, der gegen Überhitzung und mechanische Beschädigungen wesentlich unempfindlicher ist und der sich wesentlich wirtschaftlicher herstellen läßt.

Diese Aufgabe wird durch eine Manschette gelöst, welche aus einem wärmerückstellbaren Band mit einer wärmerückstellbaren Schicht aus einem vernetzten Polymeren und einer mit dieser Schicht koextrudierten Schicht aus einem thermoplastischen Polymeren besteht, auf welche eine weitere thermoplastische Schicht aufkaschiert ist, in welcher die Reißfestigkeit des Bandes erhöhende Elemente eingebettet sind und welche an der dem Substrat abgekehrten Seite des Bandes befindlich ist. Der wesentliche Vorteil der erfindungsgemäßen Lösung ist darin zu sehen, daß die koextrudierte thermoplastische Schicht beim nachfolgenden Kaschieren eine wesentlich bessere Haftung ergibt gegenüber einer Lösung, bei welcher die thermoplastische Schicht direkt auf das vernetzte Band aufkaschiert werden würde. Durch die Koextrusion ist das Band aus zwei Schichten unterschiedlicher Werkstoffe aufgebaut und zwar aus einer vernetzbaren und einer thermoplastischen nicht vernetzbaren Schicht, deren Verbindung miteinander jedoch aufgrund der Koextrusion so gut ist, als ob das Band aus einem homogenen Werkstoff bestehen würde.

Nach einer besonders vorteilhaften Ausgestaltung der Erfindung ist das vernetzte Polymer ein Polyethylen, dem Silane aufgepfropft sind und welches bei Anwesenheit von Feuchtigkeit vernetzt ist. Durch diese Maßnahme ist sichergestellt, daß beim nachfolgenden Vernetzungsprozeß das mit Silanen gepfropfte Polyethylen vernetzt wird, die thermoplastische Schicht jedoch unvernetzt bleibt. Neben dem gepfropften Polyethylen kann die Mischung für die vernetzte Schicht noch Anteile an Ethylen-Vinylazetat-Copolymer enthalten. Diese Komponente verbessert die Flexibilität des Bandes. Die koextrudierte thermoplastische Schicht besteht ebenfalls aus Polyethylen, jedoch ist dieses Polyethylen nicht gepfropft. Auch diese Schicht kann Anteile an Ethylen-Vinylazetat-Copolymer enthalten.

Die kaschierte, die verstärkenden Elemente enthaltende Schicht besteht zweckmäßigerweise ebenfalls aus Polyethylen, dem ggf. noch Ethylen-Vinylazetat-Copolymer beigemischt sein kann.

Mit besonderem Vorteil ist in der kaschierten Schicht ein nicht reckbares Gewebe eingebettet. Als Werkstoffe für das Gewebe kommen zweckmäßigerweise Baumwolle, Glasfasern, Polyamid, Polyester, Mineralwolle etc. in Frage. Wesentlich ist, daß das Gewebe bei Schrumpftemperatur d. h. bei ca. 70 - 130 °C eine erheblich höhere Reißfestigkeit als thermoplastisches oder auch vernetztes Polyethylen hat.

Die Erfindung betrifft weiterhin ein Verfahren zur Herstellung einer wärmerückstellbaren Manschette. Dieses Verfahren ist dadurch gekennzeichne, daß man ein Band aus einer Schicht aus vernetzbarem Polymer und einer Schicht aus einem nicht vernetzbaren Polymer durch Koextrusion herstellt, daß man die vernetzbare Schicht vernetzt, das man das Band auf eine Temperatur oberhalb des Kristallitschmelzpunktes der vernetzbaren Schicht erwärmt, das Band reckt und in gerecktem Zustand abkühlt und daß man auf die nicht vernetzte Schicht eine Schicht aus einem thermoplastischen Polymer aufkaschiert, in welcher die die Reißfestigkeit erhöhenden Elemente eingelagert sind. Der wesentliche Vorteil des Verfahrens ist darin zu sehen, daß man die die Reißfestigkeit erhöhenden Elemente erst nach dem Recken auf das Band aufbringt und somit Gewebe verwenden kann, die nur bedingt reckbar sind. Da eine thermoplastische Schicht gemeinsam mit der vernetzbaren Schicht koextrudiert wird, läßt sich ein fester Verbund zwischen der vernetzten Schicht und der das Gewebe enthaltenden thermoplastischen Schicht mittels der koextrudierten thermoplastischen Schicht herstellen.

Das Kaschieren ist eine Verbindungsart, bei welcher erwärmte Bänder oder Platten unter Druckanwendung miteinander verbunden werden. Die Erwärmung erfolgt dabei bis an den Schmelzpunkt der zu verbindenden Kunststoffe. Nach einem weiteren Gedanken der Erfindung wird deshalb vorgeschlagen, daß beim Kaschieren die vernetzte Schicht mit der koextrudierten Schicht temperiert wird, damit die für den Kaschiervorgang erforderliche Temperatur im Grenzbereich zwischen koextrudierter Schicht und zu kaschierendem Band erreicht wird. Darüberhinaus besteht auch die Möglichkeit, das Band beim Kaschieren einzuspannen und somit an der Schrumpfung zu hindern. Das Kaschieren kann jedoch auch unmittelbar nach dem Recken aber vor dem Abkühlen vorgenommen werden. Wesentlich hierbei ist jedoch, daß das Band beim Abkühlen eingespannt, d. h. im gereckten Zustand verbleibt.

Das Kaschieren kann in kontinuierlicher Arbeitsweise erfolgen, indem man große Längen des Bandes mit einem die Verstärkungselemente enthaltenden thermoplastischen Band kaschiert, wobei der Anpreßdruck vorzugsweise durch Walzen erfolgt. Diese Vorgehensweise setzt jedoch voraus, daß auch das Recken des Bandes kontinuierlich erfolgt.

Steht eine kontinuierliche Reckanlage nicht zur Verfügung, ist es von Vorteil, das Band nach der Koextrusion oder dem Vernetzen auf die Länge der Manschette oder ein ganzzahliges Vielfaches davon abzulängen. Diese "Kurzlängen" können dann in sogenannten Reckrahmen gereckt und anschließend in "halbkontinuierlicher" Weise kaschiert werden, indem man beispielsweise Längen von 2,50 m unmittelbar nacheinander in die Kaschieranlage schiebt.

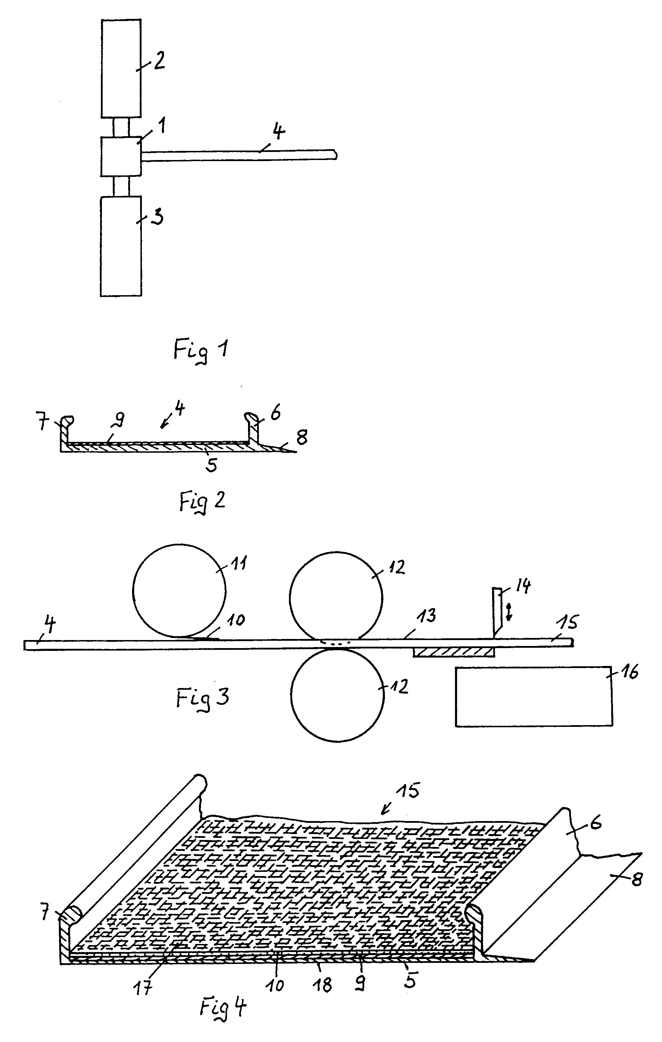

Die Erfindung ist an Hand der in den Figuren 1 bis 4 schematisch dargestellten Ausführungsbeispiele näher erläutert.

In der Figur 1 ist eine Koextrusionsanlage dargestellt, die aus einem Spritzkopf 1 besteht, auf den zwei Extruder 2 und 3 arbeiten. In den nicht dargestellten Trichter des Extruders 2 wird Granulat eingefüllt, welches aus
50 Teilen Polyethylen
40 Teilen Ethylen-Vinylazetat-Copolymer
10 Teilen Ruß
hergestellt ist. In den Trichter des Extruders 2 wird dem Granulat noch 1,0 Gew.% Vernetzungsmittel auf Silanbasis z.B. Vinylmetoxysilan beigemischt.

In den ebenfalls nicht dargestellten Trichter des Extruders 3 wird Granulat aus der gleichen Mischung eingefüllt, wobei jedoch das Vernetzungsmittel fortgelassen wird. Das aus dem Spritzkopf 1 austretende Band 4 wird gekühlt und anschließend bei ca 95 °C in einer Wasserdampfatmosphäre ca. 36 Stunden gelagert, wobei die mit Silan gepfropfte Mischung vernetzt.

Das Band 4 ist in der Figur 2 im Schnitt dargestellt. Das Band 4 besteht wie ersichtlich aus einer Schicht 5 mit den Stegen 6 und 7 sowie einer Lasche 8. Die Stege 6 und 7 dienen nach dem Herumlegen des Bandes 4 um ein Substrat zum Überschieben einer Verschlußschiene, wobei die Lasche 8 unterhalb der Stege 6 und 7 zu liegen kommt. Die Schicht 5 ist aus der in den Extruder 2 eingebrachten Mischung hergestellt und wurde vernetzt. Zwischen den Stegen 6 und 7 befindet sich eine Schicht 9, die aus der in den Extruder 3 eingegebenen Mischung besteht. Diese Schicht 9 ist unvernetzt. Durch die Koextrusion sind die Schichten 5 und 9 eine Einheit und unterscheiden sich lediglich durch die Vernetzung. Ein Ablösen der Schicht 9 von der Schicht 5 ist nicht möglich. Im Grenzbereich zwischen den Schichten 5 und 9 kann u. U. eine teilvernetzte Übergangszone entstehen, die sich jedoch als nicht schädlich erweist.

Nach dem Vernetzen wird das Band 4 auf eine Temperatur oberhalb des Kristallitschmelzpunktes der vernetzten Schicht 5 erwärmt und in erwärmten Zustand quer zu Längsrichtung der Stege 6 und 7 gereckt. Der Grad der Reckung beträgt ca. 300 bis 400 %. Im gereckten Zustand wird das Band 4 abgekühlt und befindet sich im wärmerückstellbaren Zustand, d. h. bei Wärmezufuhr schrumpft es in die bei der Koextrusion erhaltene Form zurück.

Das Recken kann in kontinuierlicher Form erfolgen oder aber in diskontinuierlicher Weise, bei der Teillängen des Bandes 4 in nicht dargestellten an sich bekannten Reckrahmen aufgeweitet werden. Das gereckte Band 4 wird dann - wie in Figur 3 dargestellt - in eine Kaschieranlage eingeführt, wobei die Schicht 9 nach oben weist. Auf diese Schicht 9 wird ein Band 10 aufgelegt, welches kontinuierlich in der Länge des Bandes 4 von einer Vorratsspule 11 abgezogen wird. Das aus dem Band 10 und dem Band 4 bestehende Gebilde wird durch ein Druckrollenpaar 12 hindurchgeführt, welches das Band 10 fest gegen die Schicht 9 drückt. Damit eine gute Verbindung zwischen der Schicht 9 und dem Band 10 entsteht, wird sowohl die Schicht 9 als auch das Band 10 aufgeheizt, so daß beide Partner zumindest im Bereich der Walzen 12 miteinander schmelzverbunden werden können. Die vernetzte Schicht 5 des Bandes 4 wird dabei zweckmäßigerweise ebenfalls leicht aufgewärmt. Das Band 10 weist innerhalb seiner Wandung ein Baumwollgewebe wie aus Figur 4 ersichtlich auf. Bevorzugt wird ein Baumwollgewebe mit einer Maschenweite zwischen 0,1 und 5 mm, wie es z. B. für Verbandszwecke als sogenannte Mullbinde verwendet wird. Das kaschierte Band 13 wird dann einer Schneidvorrichtung 14 zugeführt, welche die fertige Manschette 15 von dem Band 4 abtrennt, die dann in dem Behälter 16 gesammelt wird.

Ein Teil der Manschette 15 ist in der Figur 4 in perspektivischer Darstellung gezeigt. Das Gewebe 17 befindet sich in der Schicht 10. Die Schicht 10 mit dem Gewebe 17 kann beispielsweise durch Extrusion als Band hergestellt werden, wobei das Gewebe in einem Doppelextruder von beiden Seiten mit Polyethylen beschichtete wird. Andererseits kann das Gewebe 17 auf das erwärmte Band 10 aufgelegt und in dessen Oberfläche eingedrückt werden.

Es besteht jedoch auch die Möglichkeit, das Gewebe 17 bei dem in der Figur 3 dargestellten Arbeitsgang zwischen der Schicht 9 und dem Band 10 einlaufen zu lassen, so daß das Gewebe 17 beim Kaschieren sich sowohl mit dem Band 10 als auch mit der Schicht 9 fest verbindet.

Die Manschette 15 kann an ihrer den Schichten 9 und 10 abgekehrten Oberflächen noch mit einer dünnen Schicht 18 aus einem Heißschmelzkleber beschichtet sein, wobei das Beschichten mit Heißschmelzkleber zweckmäßigerweise nach dem Reckvorgang erfolgt.

Es soll noch betont werden, daß die in Figur 4 dargestellten Schichten 9 und 10 nicht maßstabsgerecht dargestellt sind, sondern der Deutlichkeit halber mit wesentlich größerer Wanddicke gezeigt sind.

Für eine Manschette mit einer Länge von 380 mm und einer Breite im gereckten Zustand von 310 mm, wobei der Abstand zwischen den Stegen 6 und 7 270 m beträgt, ist die Wanddicke der Schicht 5 0,35 mm, der Schicht 9 0,07 mm und der Schicht 10 0,07 mm.

Der wesentliche Vorteil der Erfindung ist darin zu sehen, daß eine Manschette mit hoher Reißfestigkeit bei Schrumpftemperatur in wirtschaftlicher Weise herstellbar ist. Alle Schichten sind innig miteinander verbunden.

## Patentansprüche

1. Wärmerückstellbare Manschette zum Umhüllen eines Substrates, insbesondere zum Umhüllen von Spleißstellen elektrischer Kabel oder Rohrleitungen, welche aus einem wärmerückstellbaren Band mit einer wärmerückstellbaren Schicht (5) aus einem vernetzten Polymeren und einer mit dieser Schicht (5) koextrudierten Schicht (9) aus einem thermoplastischen Polymeren besteht, auf welche eine weitere thermoplastische Schicht (10) aufkaschiert ist, in welcher die Reißfestigkeit des Bandes erhöhende Elemente (17) eingebettet sind und welche an der dem Substrat abgekehrten Seite des Bandes befindlich ist.

2. Wärmerückstellbare Manschette nach Anspruch 1, dadurch gekennzeichnet, daß das vernetzte Polymer ein Polyethylen ist, dem Silane aufgepfropft sind und welches bei Anwesenheit von Feuchtigkeit vernetzt ist.

3. Wärmerückstellbare Manschette nach Anspruch 1 oder 2, dadurch gekennzeichnet, daß das Band (4) aus einem Gemisch aus Polyethylen und einem Ethylen-Vinylazetat-Copolymer besteht.

4. Wärmerückstellbare Manschette nach Anspruch 1 oder einem der folgenden, dadurch gekennzeichnet, daß die koextrudierte thermoplastische Schicht (9) aus Polyethylen besteht.

5. Wärmerückstellbare Manschette nach Anspruch 1 oder einem der folgenden, dadurch gekennzeichnet, daß die kaschierte Schicht (10) aus Polyethylen besteht.

6. Wärmerückstellbare Manschette nach Anmspruch 1 oder einem der folgenden, dadurch gekennzeichnet, daß die die Reißfestigkeit erhöhenden Elemente (17) ein nicht reckbares Gewebe ist.

7. Wärmerückstellbare Manschette nach Anspruch 1 oder einem der folgenden, dadurch gekennzeichnet, daß daß Gewebe (17) aus Baumwolle, Glasfasern, Polyamid, Polyester, Mineralwolle etc. besteht.

8. Verfahren zur Herstellung einer wärmerückstellbaren Manschette nach Anspruch 1 oder einem der folgenden, dadurch gekennzeichnet, daß man ein Band aus einer Schicht aus einem vernetzbaren Polymer und einer Schicht aus einem nicht vernetzbaren Polymer durch Koextrusion herstellt, daß man die vernetzbare Schicht vernetzt, daß man das Band auf eine Temperatur oberhalb des Kristallitschmelzpunktes der vernetzten Schicht erwärmt, das Band reckt und in gerecktem Zustand abkühlt und daß man auf die nicht vernetzte Schicht eine Schicht aus einem thermoplastischem Polymer aufkaschiert, in welcher die die Reißfestigkeit erhöhenden Elemente eingelagert sind.

9. Verfahren nach Anspruch 8, dadurch gekennzeichnet, daß beim Kaschieren die vernetzte Schicht temperiert wird.

10. Verfahren nach Anspruch 8, dadurch gekennzeichnet, daß beim Kaschieren das Band eingespannt wird.

11. Verfahren nach Anspruch 8 oder einem der folgenden, dadurch gekennzeichnet, daß das Band nach der Koextrusion oder dem Vernetzen auf die Länge der Manschette oder ein ganzzahliges Vielfaches davon geschnitten wird.

## Claims

1. Heat-recoverable sleeve for enveloping a substrate, in particular for enveloping splice points of electrical cables or pipelines, which comprises a heat-recoverable strip with a heat-recoverable layer (5) of a crosslinked polymer and a layer (9), coextruded with said layer (5), of a thermoplastic polymer, onto which layer (9) a further thermoplastic layer (10) is laminated, in which the elements (17) increasing the tear strength of the strip are embedded and which is located on that side of the strip facing away from the substrate.

2. Heat-recoverable sleeve according to Claim 1, characterized in that the crosslinked polymer is a polyethylene onto which silanes are grafted and which is crosslinked in the presence of moisture.

3. Heat-recoverable sleeve according to Claim 1 or 2, characterized in that the strip (4) consists of a mixture of polyethylene and an ethylene-vinyl acetate copolymer.

4. Heat-recoverable sleeve according to Claim 1 or one of the following claims, characterized in that the coextruded thermoplastic layer (9) consists of polyethylene.

5. Heat-recoverable sleeve according to Claim 1 or one of the following claims, characterized in that the laminated layer (10) consists of polyethylene.

6. Heat-recoverable sleeve according to Claim 1 or one of the following claims, characterized in that the elements (17) increasing the tear strength are a non-stretchable woven fabric.

7. Heat-recoverable sleeve according to Claim 1 or one of the following claims, characterized in that the woven fabric (17) consists of cotton, glass fibres, polyamide, polyester, mineral wool, etc.

8. Method for producing a heat-recoverable sleeve according to Claim 1 or one of the following claims, characterized in that a strip comprising a layer of a crosslinkable polymer and a layer of a non-crosslinkable polymer is produced by coextrusion, in that the crosslinkable layer is crosslinked, in that the strip is heated to a temperature above the crystallite melting point of the crosslinked layer, the strip is stretched and cooled in the stretched state and in that a layer of a thermoplastic polymer, in which the elements increasing the tear strength are embedded, is laminated onto the non-crosslinked layer.

9. Method according to Claim 8, characterized in that the crosslinked layer is temperature-controlled during laminating.

10. Method according to Claim 8, characterized in that the strip is clamped during laminating.

11. Method according to Claim 8 or one of the following claims, characterized in that, after the coextrusion or the crosslinking, the strip is cut to the length of the sleeve or to an integral multiple thereof.

## Revendications

1. Manchon rétractable à chaud pour envelopper un substrat, en particulier pour envelopper les endroits d'épissure de câbles électriques ou de conduites tubulaires, manchon constitué d'un ruban qui est rétractable à chaud et présente une couche (5), rétractable à chaud, d'un polymère réticulé ainsi que d'une couche (9) d'un polymère thermoplastique qui est coextrudée avec cette couche (5) et sur laquelle s'applique par doublage une autre couche thermoplastique (10) dans laquelle sont enrobés les éléments (17) qui augmentent la résistance du ruban à la rupture et qui se trouve du côté du ruban opposé au substrat.

2. Manchon rétractable à chaud selon la revendication 1, caractérisé par le fait que le polymère réticulé est un polyéthylène qui est fourré de silane et qui réticule en présence d'humidité.

3. Manchon rétractable à chaud selon la revendication 1 ou 2, caractérisé par le fait que le ruban (4) est constitué d'un mélange de polyéthylène et d'un copolymère éthylène-acétate de vinyle.

4. Manchon rétractable à chaud selon la revendication 1 ou l'une des suivantes, caractérisé par le fait que la couche thermoplastique coextrudée (9) est constituée de polyéthylène.

5. Manchon rétractable à chaud selon la revendication 1 ou l'une des suivantes, caractérisé par le fait que la couche (10) appliquée par doublage est constituée de polyéthylène.

6. Manchon rétractable à chaud selon la revendication 1 ou l'une des suivantes, caractérisé par le fait que les éléments (17) qui augmentent la résistante à la rupture sont un tissu non étirable.

7. Manchon rétractable à chaud selon la revendication 1 ou l'une des suivantes, caractérisé par le fait que le tissu (17) est constitué de coton, de fibres de verre, de polyamide, de polyester, de laine minérale, etc.

8. Procédé de fabrication d'un manchon rétractable à chaud selon la revendication 1 ou l'une des suivantes, caractérisé par le fait que l'on fabrique, par coextrusion, un ruban constitué d'une couche d'un polymère réticulable et d'une couche d'un polymère non réticulable, que l'on fait réticuler la couche réticulable, que l'on chauffe le ruban à une température supérieure au point de fusion des cristallites de la couche réticulée, que l'on étire le ruban et qu'on le refroidit à l'état étiré et que sur la couche non réticulée, on applique par doublage une couche d'un polymère thermoplastique dans laquelle sont enrobés les éléments qui augmentent la résistance à la rupture.

9. Procédé selon la revendication 8, caractérisé par le fait que lors du doublage la couche réticulée se met en équilibre de température.

10. Procédé selon la revendication 8, caractérisé par le fait que lors des doublages on met le ruban sous tension.

11. Procédé selon la revendication 8 ou l'une des suivantes, caractérisé par le fait qu'après la coextrusion ou la réticulation on coupe le ruban à la longueur du manchon ou à un multiple de cette longueur.
